Europäisches Patentamt

European Patent Office

Office européen des brevets

(11) Publication number: **0 145 389**
**A2**

# EUROPEAN PATENT APPLICATION

(21) Application number: **84308149.8**

(22) Date of filing: **23.11.84**

(51) Int. Cl.⁴: **F 23 D  1/00**

(30) Priority: **15.12.83 US 561712**

(43) Date of publication of application: **19.06.85**
**Bulletin 85/25**

(84) Designated Contracting States: **DE FR GB IT SE**

(71) Applicant: **THE BABCOCK & WILCOX COMPANY,
1010 Common Street P.O. Box 60035, New Orleans
Louisiana 70160 (US)**

(72) Inventor: **Downs, William, 8646 Schubert N.E., Alliance
Ohio 44601 (US)**
Inventor: **Rackley, John M., 1870 Federal Avenue,
Alliance Ohio 44601 (US)**

(74) Representative: **Cotter, Ivan John et al, D. YOUNG &
CO. 10 Staple Inn, London WC1V 7RD (GB)**

(54) Combustion of coal-water slurries.

(57) A method of burning a coal-water (50), capable of being retrofitted to oil and gas fired industrial and utility steam boilers or as original equipment in new units, uses essentially pure oxygen (36), oxygenenriched air or hydrogen-oxygen mixtures as an atomising fluid in a burner atomiser (12).

1

## COMBUSTION OF COAL-WATER SLURRIES

This invention relates to the combustion or burning of coal-water slurries.

National energy goals currently being pursued in the USA call for increased utilisation of coal for industrial purposes in preference to oil and natural gas. This policy is intended to decrease US dependence on foreign oil and to preserve natural gas supplied for residential use. Recent developments in the search for alternative fuels have been in the successful production of coal-water slurries which may contain 65 to 80 percent by weight of dry coal suspended in water. Surprising characteristics of these slurries are that they exhibit good fluidity and stability both in transport and storage and are generally obtained by the use of pulverised coal of a particular particle size distribution for efficient particle packing coupled with the use of certain chemical additives to provide good fluidity and stability. In addition, the slurries can be beneficiated during production by decreasing the ash and sulphur contents of the coal. The substitution of coal-water slurry firing for oil in steam boilers which were originally designed for coal firing but which had been converted to oil, and in boilers originally designed for oil firing, would provide one solution to the above-mentioned national energy goals.

During the early 1980's, The Babcock & Wilcox Company, the present applicants, conducted combustion tests at its Alliance, Ohio Research Center to determine the suitability of coal-water slurries as a substitute fuel. A major programme involved testing a slurry containing 66 percent solids by weight produced from a beneficiated high volatile eastern bituminous coal, using compressed air as the atomising fluid. The primary objective was to demonstrate that the slurry could be fired in a test unit of a nominal capacity of 1.17 MW $(4.0 \times 10^6$ Btu/h) with only minor modifications to the existing fuel oil handling and firing equipment.

Although the programme was generally encouraging, some of the less desirable results can be summarised as follows.

1.    Stable ignition could be maintained only in a limited firing range of 1.14 to 1.29 MW (3.9 to 4.4 $\times 10^6$ Btu/h).

2.      A combustion air temperature of $316^{\circ}C$ ($600^{\circ}F$) was required.

3.      Preheating the furnace to operating temperature was needed for successful ignition.

4.      Flame temperatures during slurry firing were 111 to 222 deg C (200 to 400 deg F) lower than the equivalent parent coal flame.

5.      Flue gas flow rates through the test unit were higher than flow rates using conventional pulverised coal because of the high water content of the slurry.

Clearly, there is a need for improvement in the combustion of coal-water slurries of high solids content, particularly with respect to stable ignition over a range of fuel properties and in turndown capability corresponding to variable load demands.

Oxygen enrichment has been employed in the metallurgical industry and for increased yield in rotary kiln products. However, the use of oxygen, oxygen-enriched air or oxygen-hydrogen mixtures in the atomisation and combustion of coal-water slurries as disclosed in this application is believed novel and inventive.

Various aspects of the invention are set forth in the appended claims.

According to another aspect thereof, the invention comprises a method of burning a coal-water slurry, which method is capable of being retrofitted to oil and gas fired industrial and utility steam boilers or used in original equipment in new units, the method using essentially pure oxygen, oxygen-enriched air or oxygen-hydrogen mixtures as an atomising fluid in a dual-fluid atomiser. The required percentage of oxygen in the case of oxygen-enriched air depends on the amount of water present in the coal-water slurry, the particle size distribution of coal, the volatile content of coal and certain operating facts, such as heat release rate, heat absorption and load.

Since coal-water slurries are being developed as a substitute for fuel oil in many industrial and utility applications, a satisfactory, dependable method of ignition is an absolute prerequisite or is at least highly desirable. An arrangement embodying this invention and described hereinbelow provides a practical means for achieving stable ignition of a coal-water slurry in a cold furnace while minimising air and furnace preheating. At the present time, coal-water slurry ignition by conventional means requires preheating of both the furnace and the combustion air by the use of an auxiliary fuel such as natural gas or fuel oil. When slurries are prepared from low volatile coals, combustion air temperatures in excess of $427^{o}C$ ($800^{o}F$), which are beyond the capability of most existing units, have been required in test installations.

The use of oxygen as the atomising medium will reduce the total gas flow through the steam generating unit when firing coal-water slurries. For example, using 0.2 kg of oxygen for atomising 1 kg of coal in a slurry will reduce the flue gas flow through the unit to about 90% of that when using air. This reduction in gas flow for the same steam output has the following beneficial effects:

    a.      The resulting reduction in gas velocity through the convection passes will reduce erosion of heating surfaces.

    b.      Reduced exit gas flow from the unit will result in higher boiler efficiency.

    c.      Forced and induced draught fan requirements will be reduced.

    d.      Flame temperature will be higher to offset the depression of temperature due to the high water content of the slurry.

The invention will now be further described, by way of illustrative and non-limiting exmple, with reference to the accompanying drawings, in which:

Figure 1 represents a conventional ignition environment of a coal-water slurry using steam or compressed air as an atomising fluid;

Figure 2 represents an enhanced ignition environment of a coal-water slurry using oxygen as an atomising fluid;

Figure 3 is a schematic view of an atomisation system, using oxygen as an atomising fluid;

Figure 4 is a schematic view of a mixing chamber of an atomisation system using oxygen-enriched air as an atomising fluid;

Figure 5 is a schematic view of an atomisation system using a hydrogen-oxygen mixture as an atomising fluid; and

Figure 5A is a schematic view of an atomiser for the system of Figure 5.

Atomisation of fuel oil is generally accomplished with steam or compressed air. No significant difference exists between these two atomising fluids with respect to either stable ignition or combustion quality.

This is probably due in part to the high quality of this fuel. Igniting a fuel, particularly in a cold furnace, is a matter of supplying sufficient heat to the fuel stream so that a cascading thermal effect ensues. Specifically, an electric spark is usually used to ignite an easily ignitable secondary fuel such as natural gas. This flame, in turn, ignites a portion of the primary fuel. If the heat release rate of the ignited portion of the primary fuel is sufficient, it will, in turn, ignite adjacent portions of the primary fuel stream which propagates into full ignition.

The ignition of coal-water slurries in conventional fuel oil burner modes has proven to be difficult. This difficulty has been due in part to the thermal suppressing effect of evaporating water. This problem is particularly aggravated if ignition is attempted in a cold furnace, because little radiant energy is available for evaporating water in the main fuel stream. Because of this situation, the heat release rate of that portion of the coal-water mixture in direct thermal contact with either an electric spark or a gas flame will tend to produce insufficient heat to produce the necessary thermal cascading effect and full ignition will not occur.

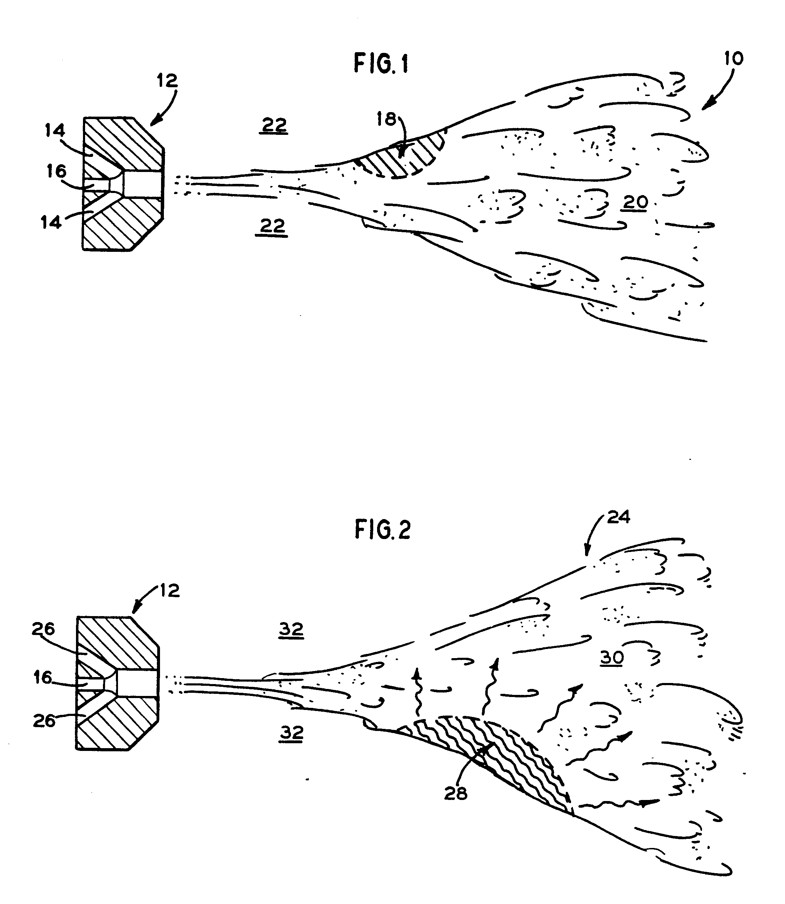

One solution to this problem, therefore, is to increase the heat release rate of the coal-water mixture during the initial ignition period. One method by which this can be accomplished is to provide localised zones of high oxygen-fuel concentrations by utilising essentially pure oxygen for atomisation of the fuel. The adiabatic flame temperature of an oxygen-coal flame can exceed $3870^\circ C$ ($7000^\circ F$), compared to a typical air-coal adiabatic flame temperature of less than $2200^\circ C$ ($4000^\circ F$). The higher flame temperature results from not having nitrogen present to act as a thermal sink. Combustion intensity is also greatly increased in an oxygen-coal flame because gas phase diffusion of oxygen to the coal particle is greatly increased due to higher oxygen partial pressure and shorter path length. Figures 1 and 2 depict these general principles.

Referring to Figure 1, a conventional ignition environment 10 is shown for coal-water slurry 16 firing in an atomiser 12, using steam or compressed air 14 as an atomising fluid. A zone 18, produced by an external heat source, is a region of ignition instability due to insufficient heat release to maintain ignition of a main steam 20 comprising coal, steam and air. A volume 22, surrounding the main stream 20, is a turbulent region of secondary air introduced by known means.

Referring to Figure 2, this shows an enhanced ignition environment 24 for coal-water slurry 16 firing using essentially pure oxygen 26 as the atomising fluid. A zone 28, produced by an external heat source, is a region of high heat release which propagates ignition of a main stream 30 comprising coal, steam and oxygen. A volume 32, surrounding the main stream 30, remains composed of a turbulent region of secondary air and induced circulation of hot furnace gases.

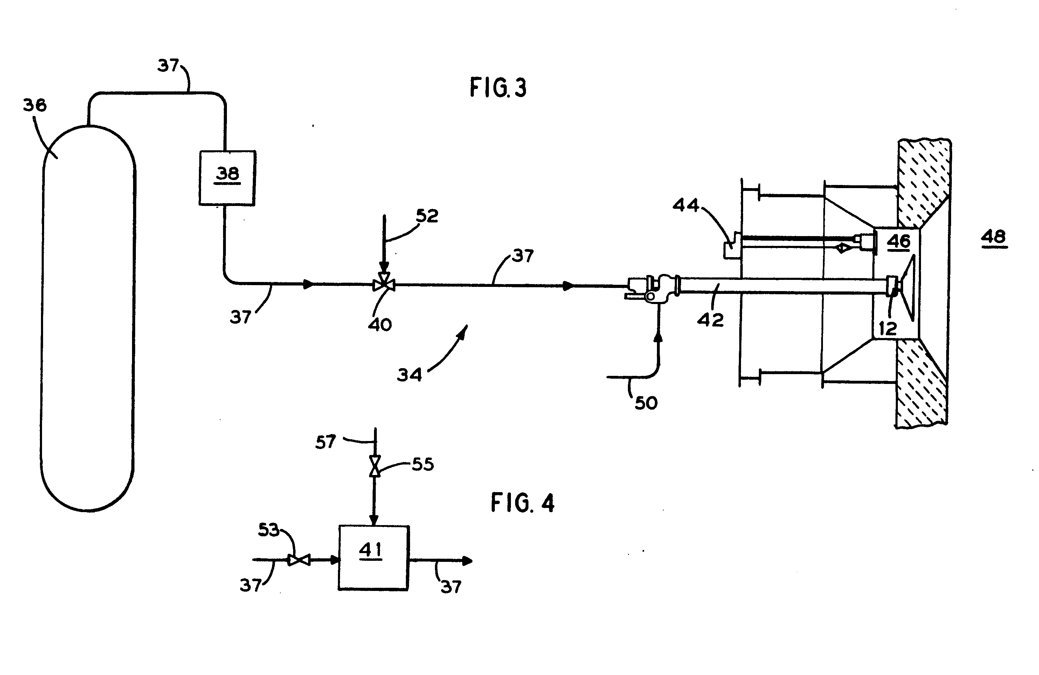

Figure 3 schematically illustrates an oxygen atomisation system 34 using oxygen as an atomising fluid. Oxygen is stored cryogenically under pressure in a tank 36. In use, a flow of oxygen is admitted through a conduit 37 to a vapouriser 38 and thence via a three-way valve 40 to an atomiser assembly 42 (including the atomiser 12) for ignition and combustion in a furnace 48. An igniter 44 provides an electric spark to ignite a secondary fuel, not shown, which in turn ignites the primary fuel stream. Secondary air is admitted through a plenum 46 and coal-water slurry is admitted through a conduit 50. A single storage tank 36, approximately 3 m (10 ft) in diameter and 12 m (39 ft) high, will supply the start-up needs for an 800 MW steam generator unit for over an hour at full load on the unit. After the furnace has been warmed to full load operating conditions, the system is switched to its normal method of atomisation using steam or compressed air admitted through a conduit 52.

Figure 4 schematically illustrates an alternative embodiment of the invention using oxygen-enriched air as the atomising fluid. The equipment arrangement would be similar to Figure 3, with the exception that a mixing chamber 41 is located upstream of the three-way valve 40. Control valves 53 and 55 are added to conduits 37 and 57, respectively, to regulate the flow of oxygen and air to the mixing chamber 41 to maintain the desired percentage of oxygen in the oxygen-enriched air.

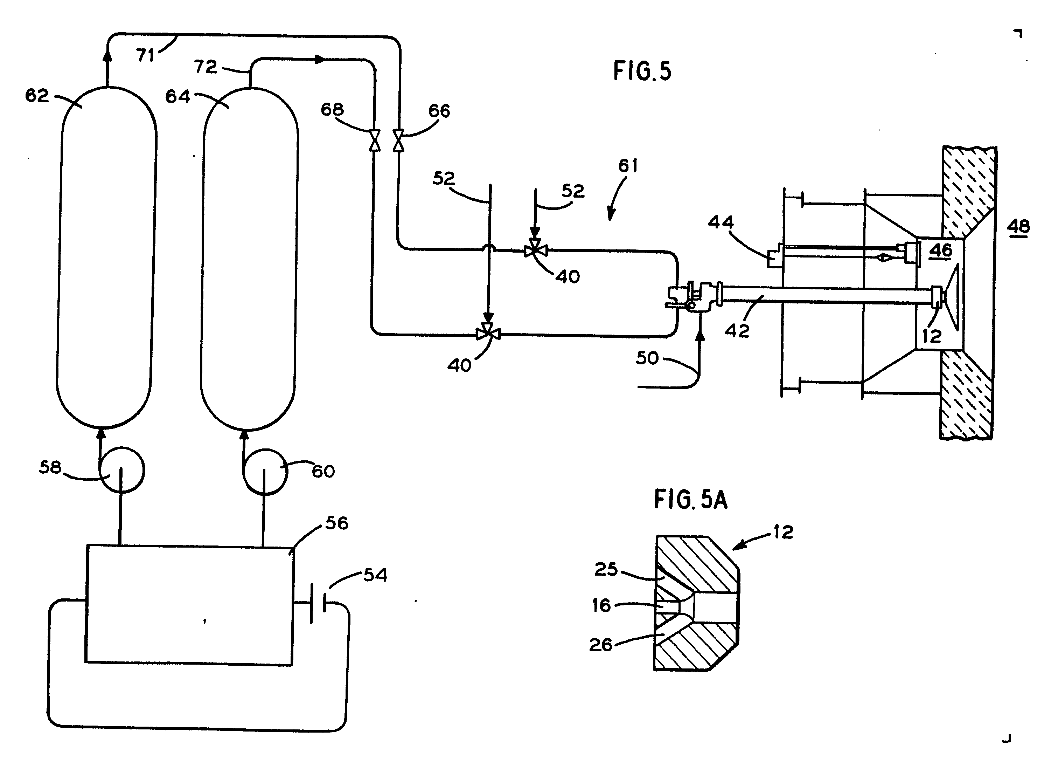

Figure 5 schematically illustrates another alternative embodiment 61 of the invention using a hydrogen-oxygen mixture as the atomising fluid. Hydrogen and oxygen gas are stored under pressure in tanks 62 and 64, respectively. An electric source 54 is connected to a bank of hydrogen and oxygen cells 56 and a water source, not shown, to generate hydrogen and oxygen by the electrolysis of water. The hydrogen and oxygen gases are pressurised by compressors 58 and 60 and stored in the tanks 62 and 64. Control valves 66 and 68 regulate the flow of hydrogen and oxygen admitted to the atomiser 12 of the atomiser assembly 42 via conduits 71 and 72 to maintain the desired ratio of hydrogen to oxygen in the atomising fluid. The remainder of the equipment in Figure 5 is similar to that schematically shown and described with reference to Figure 3. Because of the explosive nature of a mixture of hydrogen and oxygen, for safety considerations these gases are kept separate in the conduits 71 and 72 and are mixed only at the atomiser 12 to atomise the coal-water slurry 16. Figure 5A schematically represents the atomiser 12 for this arrangement, showing separate ports 25 and 26 for hydrogen and oxygen, respectively.

The use of a combustible mixture of atomising gases enhances ignition of the main fuel stream by inition of these gases within the main fuel stream, providing a wide and intimately mixed ignition region within the coal-water atomised fuel stream with consequent high heat release for stable ignition.

Commercially available hydrogen and oxygen cells operate at near theoretical yields of the gases. Hydrogen and oxygen flames yield adiabatic temperatures of $2974^{\circ}C$ ($5385^{\circ}F$) and emit radiation at a wavelength of 3064 Angstroms. This wavelength is readily absorbed by pulverised coal. Commercial cells produce on the order of $0.216 \text{ m}^3$ ($7.6 \text{ ft}^3$) of hydrogen (and thus $0.108 \text{ m}^3$ ($3.8 \text{ ft}^3$) of oxygen) per kWh. Combustion of hydrogen yields $10.25 \text{ MJ/m}^3$ ($275 \text{ Btu/ft}^3$) and an efficiency of eletrical conversion to heat of combustion of approximately 61%.

An important factor in the combustion of coal-water slurries concerns the placement of the external heat source relative to the expanding fuel-water stream leaving the atomiser. Coal-water slurry creates a unique ignition problem. Upon leaving the atomiser no ignition is possible so long as all of the coal particles are moistened by water. A coal particle must first dry before ignition and combustion becomes possible. Therefore, the point of ignition must be sufficiently downstream of the atomiser so that some of the coal particles have dried. However, if the ignition point is too far downstream of the atomiser, where the atomised coal-water stream has diverged significantly, oxygen enrichment will have diminished substantially due to entrainment of combustion air around the atomiser. Therefore, a critical region exists where sufficient coal has dried but entrainment has not yet severely diluted the atomiser oxygen to permit enhancement of the ignition process to take place. It is evident that a hydrogen-oxygen mixture would be effective over a wider region of the diverging fuel stream because combustion can occur not just with the coal particle, but between the two atomising fluids as well. A further advantage of the use of hydrogen-oxygen mixtures produced from the electrolysis of water as an atomising fluid resides in the fact that these gases are generated at stoichiometric ratios and can be combusted at stoichiometric ratios. It should be understood, however, that it is not necessary to maintain the stoichiometric ratio as long as the oxygen content is sufficient to maintain the adiabatic temperature required for stable ignition and flame propagation. The mixture has its own oxidant and is independent of air from the burner for combustion under conditions of stoichiometric ratios.

The foregoing description has been directed to particular preferred embodiments of the present invention for purposes of explanation and illustration. It should be recognised, however, by those skilled in the art, that modifications and changes in the invention may be made without departing from the scope of the invention as defined by the claims.

## CLAIMS

1.     A method of burning a coal-water slurry in industrial and utility steam boiler units, which comprises using essentially pure oxygen as an atomising fluid in a dual-fluid atomiser (12).

2.     A method of burning a coal-water slurry in industrial and utility steam boiler units, which comprises using oxygen-enriched air as an atomising fluid in a dual-fluid atomiser (12).

3.     A method of burning a coal-water slurry in industrial and utility steam boiler units, which comprises using a mixture of hydrogen and oxygen as an atomising fluid in a burner atomiser (12).

4.     A method according to claim 3, wherein the hydrogen-oxygen mixture is produced by the electrolysis of water.

FIG.1

FIG.2

0145389

1/3

0145389

FIG.3

FIG. 4

FIG.5

FIG.5A